(19) Europäisches Patentamt
European Patent Office
Office européen des brevets

(11) **EP 1 782 098 B1**

(12) **FASCICULE DE BREVET EUROPEEN**

(45) Date de publication et mention
de la délivrance du brevet:
**21.07.2010 Bulletin 2010/29**

(21) Numéro de dépôt: **05768001.9**

(22) Date de dépôt: **30.06.2005**

(51) Int Cl.:
*G01S 15/50* (2006.01)    *G01S 15/66* (2006.01)

(86) Numéro de dépôt international:
**PCT/EP2005/053115**

(87) Numéro de publication internationale:
**WO 2006/013136 (09.02.2006 Gazette 2006/06)**

(54) **PROCEDE DE CALIBRATION ANGULAIRE D'UNE ANTENNE PAR MESURE DE LA DISTANCE RELATIVE**

VERFAHREN ZUR ANTENNENWINKELKALIBRATION DURCH RELATIVE DISTANZMESSUNG

METHOD FOR AN ANTENNA ANGULAR CALIBRATION BY RELATIVE DISTANCE MEASURING

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.08.2004 FR 0408594**

(43) Date de publication de la demande:
**09.05.2007 Bulletin 2007/19**

(73) Titulaire: **THALES**
**92200 Neuilly sur Seine (FR)**

(72) Inventeur: **PILLON, Denis,**
**c/o MARKS & CLERK FRANCE**
**F-94117 ARCUEIL Cedex (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 514 252    EP-A- 0 899 581**
**FR-A- 2 722 300    FR-A- 2 798 196**

• **FLORIN F: "Calibration of high frequency imaging deformable towed arrays" OCEANS '94. 'OCEANS ENGINEERING FOR TODAY'S TECHNOLOGY AND TOMORROW'S PRESERVATION.' PROCEEDINGS BREST, FRANCE 13-16 SEPT. 1994, NEW YORK, NY, USA, IEEE, vol. 1, 13 septembre 1994 (1994-09-13), pages I-247, XP010124794 ISBN: 0-7803-2056-5**
• **XERRI B ET AL: "Passive tracking in underwater acoustic" SIGNAL PROCESSING, AMSTERDAM, NL, vol. 82, no. 8, août 2002 (2002-08), pages 1067-1085, XP004367259 ISSN: 0165-1684**

**Description**

La présente invention concerne la calibration angulaire des systèmes de réception passifs tels que des sonars ou actifs tels que certains radars dont les performances angulaires sont insuffisantes.

Calibrer une antenne consiste à déterminer pour toute les directions utiles l'erreur d'estimation (biais et écart type) entre la direction d'arrivée réelle d'un signal reçu par l'antenne et la direction d'arrivée estimée en sortie du traitement d'antenne ; on corrige ensuite à l'exploitation de l'antenne les valeurs mesurées en compensant le biais correspondant. La connaissance du biais en particulier est une donnée indispensable à la tenue des performances de l'équipement associé à l'antenne. Au regard de la mesure du gisement de la source, l'équipement agit comme un appareil de mesure dont l'antenne constitue le capteur. Un biais dans la détermination du gisement peut altérer le fonctionnement tactique du système et en particulier la fonction de localisation. C'est pourquoi il est généralement utile de procéder à une calibration.

Pour calibrer une antenne on utilise un bruiteur, fixe de préférence, mais le plus souvent mobile pour des raisons opérationnelles, devant lequel on fait évoluer le récepteur de façon à ce que tous les gisements de la plage à calibrer soient explorés : la géométrie source-récepteur doit être en permanence parfaitement connue (ou mesurée par ailleurs avec une précision nettement supérieure à la précision requise pour le récepteur à calibrer) pour qu'il soit possible de faire la comparaison gisement réel et gisement estimé sur l'antenne de réception. La détermination du gisement réel suppose soit sa mesure très précise par une méthode disponible pendant la calibration soit de pouvoir associer (temporellement) signal émis et signal reçu et donc de pouvoir définir l'axe position de l'émetteur - position de l'antenne correspondant à la mesure. Il faut préciser à ce propos qu'en principe la propagation intervient et que si l'on considère un signal émis à l'instant t il sera reçu à un instant $t+\Delta T$ (tel que $\Delta T = D/c$, c étant la célérité du son dans l'eau et D étant la distance parcourue par le signal entre source et antenne de réception). Pour la calibration, l'angle d'arrivée, mesuré à la réception en $t+\Delta T$, doit théoriquement être comparée à la direction de l'axe source à la date t et antenne à la date $t+\Delta T$. Cette précaution est souvent négligée, l'erreur que l'on fait alors étant faible puisque égale à v/1500 radian, v étant la vitesse de déplacement de la source en m/s.

Dans le cas de la calibration d'antennes sonar portées par des sous-marins, ces deux conditions imposent des contraintes de mise en oeuvre des mesures qui sont difficiles à satisfaire, quel que soit le procédé utilisé.

Un premier procédé couramment utilisé par le passé, consiste à effectuer la calibration à l'aide d'un périscope. La calibration consiste alors à effectuer des mesures optiques d'angles au moyen du périscope du sous-marin portant l'antenne à calibrer et à comparer la mesure d'angle obtenue au moyen du périscope avec la mesure fournie par le récepteur sonar associé à l'antenne.

Cette première méthode a l'avantage de la simplicité. En effet, elle ne requiert aucun équipement de mesure complémentaire, le périscope faisant partie des équipements du bord. En revanche, cette méthode présente plusieurs inconvénients.

La mesure par périscope nécessite en premier lieu une opération préalable de calibration du périscope qui doit servir de référence de mesure.

La mesure par périscope nécessite ensuite que le sous-marin reste juste en dessous de la surface avec parfois pour conséquence que l'antenne à calibrer se trouve incomplètement immergée ce qui en modifie les caractéristiques. D'autre part, même si l'antenne se trouve complètement immergée, les conditions de propagation des ondes sonores sous la surface sont très particulières et soumises aux aléas météorologiques, ce qui peut altérer les mesures. Ce procédé ne permet pas un étalonnage de l'antenne à différentes profondeurs lequel est nécessaire pour prendre en compte les variations de comportement acoustique de l'antenne en fonction de la pression.

La visée périscopique est, dans de bonnes conditions de visibilité une mesure assez précise. Néanmoins, pour réaliser une mesure précise, il faut pouvoir viser la source elle-même, ce qui n'est pas le possible si celle-ci est tractée derrière un bateau ou portée par un véhicule sous-marin.

Du fait des contraintes citées plus haut, le procédé de calibration par périscope ne permet qu'une calibration imparfaite dans des conditions opérationnelles trop contraignantes. C'est pourquoi il est souvent réservé à des contrôles préliminaires.

L'arrivée de moyens de positionnements électromagnétiques modernes utilisant notamment des moyens de localisation par satellite, de type GPS par exemple, ont fait évoluer les procédés de calibration basés sur la connaissance des positions absolues du bruiteur et du récepteur en supprimant en particulier les contraintes de profondeur et de proximité. Avec de tels moyens de localisation, le navire remorqueur peut connaître sa position initiale avec une précision suffisante et rafraîchir son information de position pendant toute la durée de l'opération de calibration. De même, le sous-marin peut connaître avant plongée, sa position initiale, information de position qu'il pourra réactualiser au fil du temps au moyen de ses instruments de navigation de bord. Il peut ainsi utiliser sa centrale inertie (SINS) ou encore naviguer à l'estime au moyen du gyrocompas et du loch. Ainsi, lors de l'opération de calibration le récepteur effectue des mesures angulaires $\beta_m(t_i)$ et les associe aux coordonnées du sous-marin, calculées pour les instants de mesure $t_i$. Pour réaliser l'opération de calibration avec de tels moyens, il reste à associer pour chaque instant de mesure $t_i$ les

informations de position du bruiteur, disponibles à bord du navire remorqueur, avec les informations de position du sous-marin et avec les mesures $\beta_m(t_i)$ correspondantes, qui se trouvent enregistrées à bord du sous-marin. Cette association est généralement réalisée à terre par dépouillement des enregistrements effectués pendant l'opération de mesure.

Par rapport aux procédés utilisant une visée au moyen d'un périscope, cas précédent, ce deuxième type de procédé présente l'avantage, comme il a été dit précédemment de permettre de faire évoluer le bruiteur à une distance suffisante pour minimiser l'influence de la parallaxe. De plus, le sous-marin n'étant plus tenu par la nécessité de faire émerger son périscope, il est possible grâce à ce type de procédé d'effectuer des mesures de calibration pour différentes profondeurs dans des conditions de pression plus opérationnelles.

En revanche les mesures étant réalisées indépendamment sur chaque bâtiment, ce type de procédé ne permet pas de connaître le résultat de la calibration immédiatement à l'issu de l'opération de mesure. Le dépouillement des données, généralement réalisé à terre, peut prendre plusieurs semaines. Ce délai peut entraîner un retard dans la validation des fonctionnalités opérationnelles exploitant les mesures d'azimut issues du sonar.

Cet inconvénient peut être partiellement contourné en dotant le navire remorqueur et le sous-marin de moyens de communication acoustique permettant par exemple au remorqueur de transmettre en temps réel sa position au sous-marin pendant l'opération de mesure. Toutefois ces moyens acoustiques spécifiques sont lourds à mettre en oeuvre et coûteux. De plus il peut engendrer des perturbations sensibles de la mesure d'angle.

Il est également possible d'envisager après la phase de mesures, une phase de transmissions de données entre le navire remorqueur et le sous-marin, le sous-marin refaisant surface pour établir une liaison radio avec le navire remorqueur, liaison durant laquelle le navire remorqueur transmet son fichier de position. L'ensemble des opérations peut alors ensuite être traité à bord du sous-marin. En pratique, cette deuxième solution suppose que le navire remorqueur, qui n'est en général qu'un bâtiment de soutien des établissements portuaires, soit doté de moyens de transmission numériques compatibles de ceux du sous-marin et ayant un débit suffisant.

Dans tous les cas, ce type de procédés qui met en jeu des moyens de type GPS associés à divers moyens de communication sécurisés, mobilise une infrastructure assez lourde. De plus, ils sont inopérants en cas de bruiteur porté par un sous-marin.

En matière de procédés connus de calibration on peut enfin citer les procédés utilisant une source fixe de position connue, par exemple ancrée au fond. En pratique, l'utilisation d'un tel procédé est très limitée et ne peut s'appliquer qu'à des configurations de type petit fond. Par grand fond, l'ancrage d'une source fixe est difficile et maintenir fixe un bruiteur remorqué est peu envisageable. Les navires remorqueurs préférant, pour des raisons de sécurité maritime, ne pas rester en haute mer avec leurs moteurs à l'arrêt, se meuvent en entraînant un mouvement du bruiteur. L'emploi de bateaux à positionnement dynamique comme ceux de l'exploitation pétrolière, par ailleurs très bruyants et peu répandus, n'offre pas de réelle solution au problème de maintien de la source en position fixe en haute mer.

On constate donc que les procédés de calibration connus de l'art antérieur, basés sur la connaissance par le récepteur des positions absolues du bruiteur et de l'antenne de réception pendant toute la durée des mesures, présentent tous des inconvénients importants.

Le texte de la demande de brevet européen portant la référence EP-A-0 899 851 déposée par la société Delco Electronics Corporation le 3 mars 1999, décrit un procédé permettant de calibrer les mesures réalisées par un radar anticollision actif, destiné à équiper un véhicule automobile et configuré pour surveiller l'espace situé à l'avant du véhicule porteur, de façon à détecter tout objet situé trop près du véhicule et à adapter le comportement de ce véhicule dans un pareil cas. Le procédé décrit permet de déterminer l'erreur d'orientation du faisceau radar par rapport à l'axe de progression du véhicule et de corriger dynamiquement cette erreur. Cependant, le procédé décrit utilise, pour réaliser cette calibration angulaire, des objets présents sur la route suivie par ce véhicule ou des objets présents sur le bord de cette route. Il utilise principalement les véhicules évoluant dans l'environnement du véhicule portant l'équipement radar sur des trajectoires similaires à celle suivie par ce véhicule, de sorte que, le comportement des différents objets fixes ou mobiles utilisés pour réaliser la calibration n'étant pas maitrisé pendant l'opération de calibration on suppose que ces objets sont naturellement coopérants et adoptent une trajectoire conforme à celle nécessaire pour opérer une calibration satisfaisante.

Le texte de la demande de brevet français portant la référence 99 111 82 déposée par la société Thomson CSF le 07/09 1999, décrit un dispositif et un procédé pour calibrer en atelier, de manière non dynamique, un radar anti collision pour véhicule automobile et pour réaliser l'alignement du radar sur l'axe de progression normal du véhicule. La mise en oeuvre du procédé décrit suppose l'emploi d'un équipement annexe de type goniomètre et que le véhicule soit garé sur un plan de roulage; de sorte que le procédé n'est pas applicable dans un contexte opérationnel dans lequel le véhicule porteur est en mouvement dans son environnement naturel. En outre le procédé décrit constitue une méthode qui ne permet pas une calibration dynamique de l'équipement radar monté sur le véhicule.

Pour remédier aux inconvénients que présentent les procédés connus de l'art antérieur, l'invention est décrite par la revendication 1.

Selon une autre caractéristique de l'invention la trajectoire du bruiteur est reconstituée à partir des mesures de distances relatives antenne-bruiteur au moyen d'un algorithme de trajectographie passive.

Selon une autre caractéristique de l'invention le calcul de la distance relative, $d(t_i)$, entre le bruiteur et l'antenne à un instant donné $t_i$, est effectué en prenant en compte le profil bathycélérimétrique du milieu.

Selon une autre caractéristique de l'invention la prise en compte du profil bathycélérimétrique du milieu est réalisée en exploitant un modèle déterminé de propagation des ondes, directement ou au travers d'un abaque.

Dans un mode de mise en oeuvre préféré le véhicule portant l'antenne suit une trajectoire régulière sensiblement circulaire

Dans un autre mode de mise en oeuvre préféré le véhicule portant l'antenne suit une trajectoire en zig-zag.

L'avantage de l'invention est de ne pas nécessiter un système de navigation pour le bruiteur ni d'échange de mesures entre plates-formes.

Lorsque la trajectoire de la source a été reconstituée, on calibre l'antenne en comparant la direction du bruiteur estimée par le récepteur à sa direction réelle déduite des trajectoires du bruiteur et de l'antenne aux instants de mesure considérés $t_i$, pour le bruiteur et $t_i + \Delta T_i$ pour l'antenne, ou plus simplement à l'instant $t_i$ si on néglige le temps de propagation.

D'autres caractéristiques et avantages pourront apparaître au travers de la description qui suit, description illustrée par les figures 1 à 4 qui représentent:

- la figure 1, une illustration schématique du mode de mise en oeuvre du procédé selon l'invention,
- la figure 2, une illustration d'un type possible de trajectoire de mesure, donné à titre d'exemple non limitatif,
- la figure 3, le synoptique de principe de l'opération de détermination de la distance relative bruiteur-antenne,
- la figure 4, un synoptique résumant les différentes opérations du procédé selon l'invention.

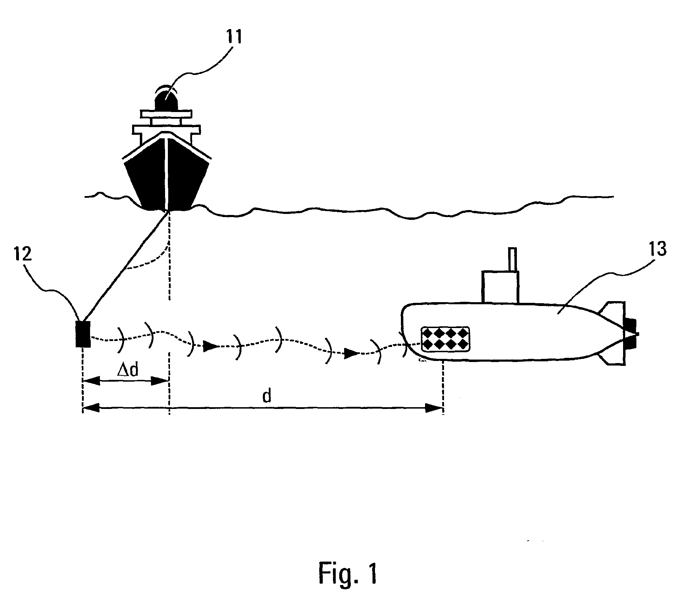

La figure 1 permet d'illustrer de façon schématique le principe de mise en oeuvre du procédé de calibration selon l'invention. Comme il a été dit précédemment, le procédé selon l'invention, met en oeuvre un navire de surface 11 animé d'un mouvement relatif par rapport au sous-marin 13 et remorquant un bruiteur 12 immergé à une profondeur donnée. Le bruiteur peut être aussi porté par un sous-marin ou un véhicule télécommandé. Le bruiteur émet généralement des impulsions sonores qui sont reçues à bord du sous-marin écouteur 13 par l'antenne 14 dont on veut effectuer la calibration.

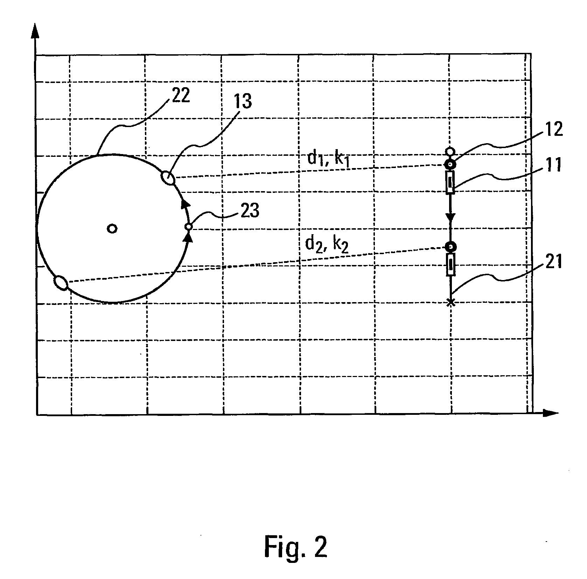

La figure 2 illustre sur un exemple la méthode employée par le procédé selon l'invention pour s'affranchir des mesures directes de la position du bruiteur. Comme le montre la figure, la méthode consiste à faire suivre au navire remorqueur une cinématique 21 sensiblement rectiligne uniforme et au sous-marin portant l'antenne à calibrer une trajectoire quelconque 22 non rectiligne. On choisit de préférence une trajectoire qui permette d'explorer les gisements à calibrer. Dans l'exemple de la figure 2, le sous-marin 13 effectue une boucle selon une trajectoire sensiblement circulaire.

Le procédé selon l'invention utilise les distances relatives déterminées en des instants $t_i$. Il utilise également un algorithme de trajectographie passive particulier, pour reconstituer avec la précision nécessaire et sans ambiguïté la trajectoire du bruiteur La mise en oeuvre de cet algorithme se trouve avantageusement facilitée par le choix des trajectoires particulières définies précédemment, trajectoire rectiligne uniforme pour le bruiteur et trajectoire non rectiligne pour l'antenne. Cet algorithme particulier peut être décrit comme suit.

Bien que pour la calibration on repère généralement les directions par des gisements c'est à dire avec une référence « antenne » ou « bateau », dans la description de l'algorithme les repères orthonormés ne sont pas liés aux mobiles et les angles sont des azimuts repérés par rapport au nord.

Soient $(x_r, y_r)$ les coordonnées de l'antenne définies dans un repère donné et $(x_s, y_s)$ les coordonnées du bruiteur dans le même repère, et en supposant rectiligne uniforme le mouvement du bruiteur, ce mouvement peut être défini par un vecteur d'état à quatre composantes ayant pour expression:

$$X \equiv X_s(t_0) = [x_s(t_0), y_s(t_0), v_x, v_y] \qquad [3]$$

Où $x_s(t_0)$, $y_s(t_0)$, $v_x$ et $v_y$ sont des inconnues.

A partir de ce vecteur d'état, la position du bruiteur à un instant $t_i$ est donnée par les expressions:

$$x_s(t_i; X) = x_s(t_0) + (t_i - t_0) v_x \qquad [4]$$

et

$$y_s(t_i; X) = y_s(t_0) + (t_i - t_0)\cdot v_y \qquad\qquad [5]$$

Par ailleurs, les coordonnées du bruiteur à un instant $t_i$ donné peuvent s'exprimer à partir de la détermination de $d(t_i)$ par la relation suivante:

$$d(t_i; X) = [\ (x_s(t_i; X) - x_R(t_i))^2 + (y_s(t_i; X) - y_R(t_i))^2\ ]^{\frac{1}{2}} \qquad [6]$$

Pour connaître la position du bruiteur aux instants $t_i$, il importe donc de déterminer les composantes $x_s(t_0)$, $y_s(t_0)$, $v_x$ et $v_y$ du vecteur d'état X. A cet effet le procédé selon l'invention détermine l'estimation $\Psi$ du vecteur X en déterminant les valeurs $x_s(t_0)$, $y_s(t_0)$, $v_x$ et $v_y$ qui minimisent un critère de convergence quadratique défini par la relation suivante:

$$J_d(X) = \Sigma\ [\ (d(t_i; X) - d^m(i))/\ \sigma_d(i)\ ]^2 \qquad\qquad [7]$$

On peut ainsi écrire:

$$J_d(\Psi) = \min\ [J_d(X)] \qquad\qquad [8]$$

Cette minimisation donne avantageusement une solution unique dans la mesure où, comme il a été précisé précédemment, l'antenne suit une trajectoire non rectiligne.

Pour trouver le minimum de $J_d(X)$, on utilise par exemple un algorithme de type gradient que l'on initialise avec la distance mesurée à $t_0$ et avec l'azimut mesuré par le sonar au même instant initial.

Connaissant les valeurs $x_s(t_0)$, $y_s(t_0)$, $v_x$ et $v_y$, il est alors possible de calculer l'azimut $\beta(t_i)$ correspondant à la direction bruiteur-antenne à un instant $t_i$ donné en utilisant la formule suivante:

$$\beta(t_i;\ \Psi)= \text{Arctangente}\ [(x_s(t_i;\Psi) - x_R(t_i))\ /\ (y_s(t_i;\Psi) - y_R(t_i))] \qquad [9]$$

dans la relation [9] $x_r(t_i)$ et $y_r(t_i)$ sont les coordonnées de l'antenne à l'instant $t_i$, coordonnées qui peuvent être déterminée avec précision par les équipement de bord du sous-marin portant l'antenne à calibrer.

Les valeurs $\beta(t_i)$ étant obtenues au moyen du procédé selon l'invention, la calibration consiste ensuite à comparer pour chaque instant la valeur de l'azimut mesuré par l'antenne à l'azimut calculé aux mêmes dates.

Ainsi, pour calibrer un sonar passif, le procédé selon l'invention procède à la mesure de la série des distances relatives nécessaires à la reconstitution de la trajectoire du bruiteur en mesurant, à l'aide du récepteur, l'instant d'arrivée des signaux successivement émis aux dates $t_i$.

Il est à noter que dans le cas d'un sonar actif, ou encore d'un radar, la calibration est facilitée par le fait que l'équipement considéré maîtrise à lui seul la chronométrie des émissions et peut donc directement réaliser une mesure précise de la distance à chaque émission.

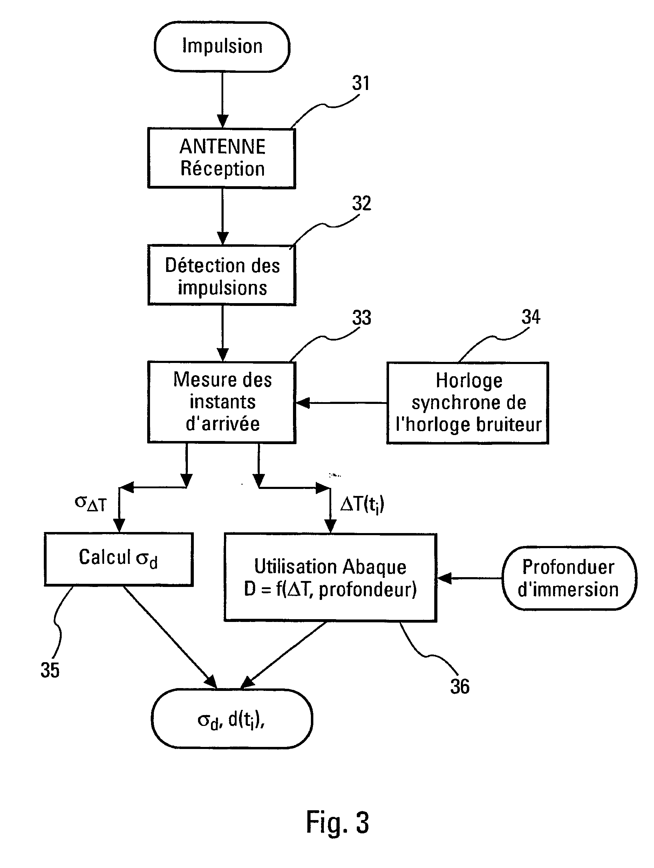

La figure 3 présente le synoptique de la fonction permettant, dans la mise en oeuvre du procédé selon l'invention, de déterminer la distance relative bruiteur-antenne à partir des mesures des instants d'arrivée des signaux émis par le bruiteur.

A un instant donné $t_i$, le bruiteur se trouve situé à une distance D de l'antenne. Au premier ordre, sans tenir compte des variations de c, on peut écrire:

$$D = c\cdot \Delta t \qquad\qquad [10]$$

où c représente la célérité du son dans le milieu marin et où $\Delta$t correspond au temps écoulé entre l'instant d'émission de l'impulsion sonore par le bruiteur et l'instant de réception par l'antenne.

Connaissant c et $\Delta$t il est donc possible de calculer, pour des instants déterminés, la distance séparant le bruiteur de l'antenne. Le terme c est (en première approximation) une constante du milieu qui peut être mesurée par ailleurs, tandis que le terme $\Delta$t est le résultat d'une mesure qui peut être réalisée en déterminant l'instant de réception de l'impulsion, si les équipements situés à bord du sous-marin ont connaissance d'une façon ou d'une autre de l'instant d'émission. Dans la pratique cette connaissance résulte d'une synchronisation préalable des horloges du navire 11 remorquant le bruiteur et du sous-marin 13. Les horloges utilisées ont notamment la particularité de dériver très peu au cours du temps. A cet effet les horloges utilisées sont des horloges de précision à quartz, ou encore des horloges atomiques.

Comme le montre la figure 3, l'opération de calcul de la distance relative comporte plusieurs étapes.

Les deux premières étapes consistent dans la réception 31 du signal par l'antenne à calibrer et par l'estimation 32 de l'instant d'arrivée d'une impulsion émise par le bruiteur. Cette estimation est réalisée de manière connue par détection du front de montée de l'impulsion, soit encore par corrélation du signal reçu soit par toute autre méthode connue de traitement du signal.

Au cours de l'étape suivante 33, on effectue la mesure de l'instant d'arrivée $T_i$ de l'impulsion émise à l'instant d'émission $t_i$ par le bruiteur, puis on calcule la valeur du retard $\Delta T(t_i)$ correspondant au temps de parcours de l'impulsion. Le calcul de $\Delta T$ nécessite de disposer à bord du sous-marin, comme il a été dit précédemment d'une horloge interne 34 précise et stable, synchrone de l'horloge d'émission. A cet effet l'horloge 34 utilisée est par exemple une horloge atomique qui présente l'avantage de ne pas nécessiter que la synchronisation avec l'horloge du bruiteur ait lieu juste avant l'opération de calibration. Une telle antenne présente en effet une dérive inférieure à 500 $\mu$s sur une période de 24 heures, ce qui correspond à une erreur de mesures de distance de 75 cm si l'on considère une célérité du milieu égale à 1500 m/s.

L'étape de détermination de $\Delta T(t_i)$ s'accompagne en outre d'une étape 35 de détermination de la précision $\sigma_{\Delta T}(t_i)$ de la mesure de $\Delta T$. Cette précision est en particulier fonction du rapport signal à bruit mesuré par le récepteur associé à l'antenne. De cette détermination on tire la valeur de la précision $\sigma_d(t_i)$ sur la détermination de la distance relative bruiteur-antenne, $\sigma_d(t_i)$ étant liéà $\sigma_{\Delta T}(t_i)$ par la formule $\sigma_d(t_i) = c\,\sigma_{\Delta T}(t_i)$.

Selon l'invention on peut prendre en compte les variations de célérité du son dans le milieu pour améliorer l'estimation de la distance en prenant en compte aussi que le son ne se propage pas en ligne droite.

L'étape 36, qui se déroule parallèlement à l'étape 35, consiste à déterminer la distance $d(t_i)$ à partir du calcul de $\Delta T$ effectué à l'étape précédente. La détermination de la distance $d(t_i)$ fait intervenir la célérité de l'onde sonore dans le milieu traversé. Or comme on l'a vu précédemment cette célérité varie notamment en fonction de la profondeur. La variation de la célérité du milieu va avoir pour conséquence principale d'induire une propagation non rectiligne entre le bruiteur et l'antenne. Il existe des programmes de calcul des trajets ou rayons de propagation des ondes sonores dans un milieu donné, à une profondeur donnée qui font intervenir la nature des fonds et le profil bathycélérimétrique du milieu. Ces programmes permettent de définir des abaques pouvant être utilisés pour déterminer en fonction du temps de propagation de l'impulsion émise par le bruiteur et de la profondeur d'immersion, la distance relative $d(t_i)$ entre le bruiteur et l'antenne à l'instant $t_i$. On rappelle ici que le profil bathycélérimétrique du milieu représente la variation de la célérité des ondes sonores en fonction de la profondeur.

Ainsi, à l'issue des étapes 35 et 36 on dispose pour chaque instant de mesure $t_i$ de la distance relative $d(t_i)$ et de la mesure $\sigma_d(t_i)$ de la précision sur $d(t_i)$.

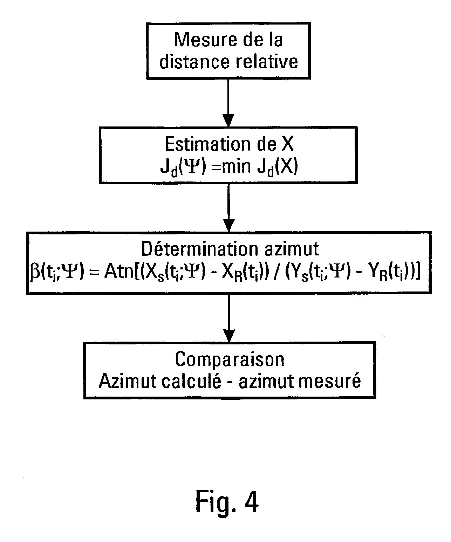

L'ensemble du procédé peut être résumé par l'illustration de la figure 4.

Dans la pratique, la zone de calibration est choisie de telle façon que le profil bathycélérimétrique soit régulier, que le fond soit plat et qu'il n'y ait pas de courants entraînant des perturbations du milieu entre la source et le récepteur. Dans ces conditions, à partir du profil mesuré, des programmes de propagation permettent de calculer le trajet précis du rayon acoustique principal, dit direct. A partir de ce trajet, on obtient un temps de parcours du son $\tau(d)$, d étant la distance horizontale. Moyennant ces précautions sur le choix de la zone, du programme de calcul de propagation, de la justesse du profil bathycélérimétrique déterminé, de la précision des horloges, on obtient typiquement et pour des plages de distances pouvant être de l'ordre de la dizaine de kilomètres, une erreur sur la détermination de la distance de l'ordre de quelques mètres.

Certains programmes de détermination des conditions de propagation, qui prennent aussi en compte des variations de la célérité en fonction de la distance, peuvent être employés préférentiellement à ceux décrits ci-dessus. Cependant, compte tenu des distances utiles en calibration les différences constatées sont très faibles, hormis dans des zones très particulières qu'on évite pour les calibrations.

Dans les cas où il n'est pas possible de trouver une zone relativement homogène pour la calibration, le procédé selon l'invention permet de prendre en compte les réfractions horizontales et d'exploiter des modèles de propagation non seulement pour estimer les distances relatives mais aussi pour prendre en compte la déviation de la direction du signal à la réception. Néanmoins cela impose une connaissance de la célérité du son en tout point et à tout moment difficile à obtenir, ce qui explique l'avantage que procure le choix d'une zone adaptée.

**Revendications**

1. Procédé de calibration angulaire en situation réelle d'une antenne d'un sonar passif portée par un véhicule (13), la calibration étant réalisées à partir d'une série de mesures successives de la distance relative (d) entre un bruiteur mobile (12) et le véhicule portant l'antenne effectuées par ledit véhicule (13), **caractérisé en ce que** la calibration est réalisée alors que le bruiteur mobile (12) se déplace selon une trajectoire rectiligne uniforme, et que le véhicule (13) se déplace selon une trajectoire non rectiligne, la trajectoire du bruiteur étant reconstituée depuis le véhicule (13) porteur de l'antenne à partir de mesures de distance relative entre le bruiteur (12) et l'antenne, la distance relative (d) étant déterminée par la mesure (33) du temps de propagation ($\Delta T$) du signal provenant du bruiteur, les instants d'arrivée du signal émis par le bruiteur étant mesurés au moyen d'horloges synchrones des horloges du bruiteur.

2. Procédé selon la revendication 1 **caractérisé en ce que** la trajectoire (21) du bruiteur est reconstituée à partir des mesures de distances relatives antenne-bruiteur au moyen d'un algorithme de trajectographie passive.

3. Procédé selon l'une des revendications 1 ou 2, **caractérisé en ce que** le véhicule (13) portant l'antenne suit une trajectoire (22) régulière sensiblement circulaire

4. Procédé selon l'une des revendications 1 à 3, **caractérisé en ce que** le véhicule (13) portant l'antenne suit une trajectoire en zig-zag.

5. Procédé selon l'une quelconque des revendications précédentes, **caractérisé en ce que**, le calcul de la distance relative ($d(t_i)$), entre le bruiteur (12) et l'antenne à un instant donné $t_i$, est effectué en prenant en compte le profil bathycélérimétrique du milieu.

6. Procédé selon la revendication 5, **caractérisé en ce que** la prise en compte du profil bathycélérimétrique du milieu est réalisée en exploitant un modèle déterminé de propagation des ondes, directement ou au travers d'un abaque (36).

**Claims**

1. A process for the angular calibration of a passive sonar antenna mounted on a vehicle (13) in an actual situation, the calibration being performed from a series of successive measurements of the relative distance (d) between a mobile acoustic device (12) and the vehicle carrying the antenna and being performed by said vehicle (13), **characterised in that** the calibration is performed when the mobile acoustic device (12) moves along a uniform rectilinear trajectory , wile the vehicle (13) moves along a non-rectilinear trajectory, the trajectory of the acoustic device being reconstituted from the vehicle (13) carrying the antenna by means of measurements of the relative distance between the acoustic device (12) and the antenna, the relative distance (d) being determined by the measurement (33) of the propagation time (AT) of the signal originating from the acoustic device, the arrival times of the signal emitted by the acoustic device being measured using clocks synchronous with the clocks on the acoustic device.

2. The process according to claim 1, **characterised in that** the trajectory (21) of the acoustic device is reconstituted from the measurements of the relative distances between the antenna and the acoustic device by means of a passive trajectography algorithm.

3. The process according to claim 1 or 2, **characterised in that** the vehicle (13) carrying the antenna follows an essentially circular, regular trajectory (22).

4. The process according to any one of claims 1 to 3, **characterised in that** the vehicle (13) carrying the antenna follows a zig-zag trajectory.

5. The process according to any one of the previous claims, **characterised in that** the calculation of the relative distance ($d(t_i)$), between the acoustic device (12) and the antenna at a given instant $t_i$, is performed by taking into account the bathycelerimetric profile of the environment.

6. The process according to claim 5, **characterised in that** the consideration of the bathycelerimetric profile of the environment is performed by means of a determined wave propagation model, directly or through a chart (36).

**Patentansprüche**

1. Verfahren zur Winkelkalibrierung einer auf einem Fahrzeug (13) montierten passiven Sonarantenne in einer tatsächlichen Situation, wobei die Kalibrierung von einer Reihe von aufeinanderfolgenden Messungen des relativen Abstands (d) zwischen einem mobilen Geräuschgenerator (12) und dem die Antenne tragenden Fahrzeug durchgeführt wird und von dem Fahrzeug (13) durchgeführt wird, **dadurch gekennzeichnet, daß** die Kalibrierung erfolgt, wenn der mobile Geräuschgenerator (12) sich über eine gleichmäßige geradlinige Bahn bewegt und das Fahrzeug (13) sich über eine nicht geradlinige Bahn bewegt, wobei die Bahn des Geräuschgenerators von dem die Antenne tragenden Fahrzeug (13) mittels Messungen der relativen Distanz zwischen dem Geräuschgenerator (12) und der Antenne wiederhergestellt wird, wobei die relative Distanz (d) durch die Messung (33) der Ausbreitungszeit ($\Delta T$) des vom Geräuschgenerator kommenden Signals bestimmt wird, wobei die Ankunftszeiten des vom Geräuschgenerator emittierten Signals mit Uhren gemessen werden, die mit den Uhren am Geräuschgenerator synchron sind.

2. Verfahren nach Anspruch 1, **dadurch gekennzeichnet, daß** die Bahn (21) des Geräuschgenerators von den Messungen der relativen Distanzen zwischen der Antenne und dem Geräuschgenerator mittels eines passiven Bahnverfolgungsalgorithmus wiederhergestellt wird.

3. Verfahren nach Anspruch 1 oder 2, **dadurch gekennzeichnet, daß** das die Antenne tragende Fahrzeug (13) einer regelmäßigen, im Wesentlichen kreisförmigen Bahn (22) folgt.

4. Verfahren nach einem der Ansprüche 1 bis 3, **dadurch gekennzeichnet, dass** das die Antenne tragende Fahrzeug (13) einer Zickzack-Bahn folgt.

5. Verfahren nach einem der vorherigen Ansprüche, **dadurch gekennzeichnet, dass** die Berechnung der relativen Distanz ($d(ti)$) zwischen dem Geräuschgenerator (12) und der Antenne zu einem gegebenen Zeitpunkt $t_i$ unter Berücksichtigung des bathycelerimetrischen Profils der Umgebung erfolgt.

6. Verfahren nach Anspruch 5, **dadurch gekennzeichnet, dass** die Berücksichtigung des bathytachymetrischen Profils der Umgebung mittels eine bestimmten Wellenausbreitungsmodells direkt oder über eine Chart (36) erfolgt.

EP 1 782 098 B1

Fig. 1

9

Fig. 2

Impulsion

ANTENNE
Réception —— 31

Détection des
impulsions —— 32

Mesure des
instants
d'arrivée —— 33

Horloge
synchrone de
l'horloge bruiteur —— 34

$\sigma_{\Delta T}$

$\Delta T(t_i)$

Calcul $\sigma_d$

Utilisation Abaque
D = f($\Delta T$, profondeur)

Profonduer
d'immersion

35

36

$\sigma_d$, d($t_i$),

## Fig. 3

Mesure de la
distance relative

Estimation de X
$J_d(\Psi) = \min J_d(X)$

Détermination azimut
$\beta(t_i;\Psi) = \mathrm{Atn}[(X_s(t_i;\Psi) - X_R(t_i)) / (Y_s(t_i;\Psi) - Y_R(t_i))]$

Comparaison
Azimut calculé - azimut mesuré

Fig. 4

**EP 1 782 098 B1**

## RÉFÉRENCES CITÉES DANS LA DESCRIPTION

**Documents brevets cités dans la description**

- EP 0899851 A